Europäisches Patentamt

European Patent Office

Office européen des brevets

(11) Publication number: **0 371 624**
**A1**

## EUROPEAN PATENT APPLICATION

(21) Application number: **89311324.1**

(51) Int. Cl.⁵: **H04L 7/033**

(22) Date of filing: **01.11.89**

(30) Priority: **03.11.88 FR 8814320**

(43) Date of publication of application:
**06.06.90 Bulletin 90/23**

(84) Designated Contracting States:
**AT BE CH DE ES FR GB GR IT LI LU NL SE**

(71) Applicant: **LSI LOGIC EUROPE PLC**
**Grenville Place, The Ring**
**Bracknell, Berkshire RG12 1BP(GB)**

(72) Inventor: **Renaux, Jacky**
**81 avenue des Tilleuls**
**F-91600 Savigny sur Orge(FR)**

(74) Representative: **Thomson, Roger Bruce et al**
**POLLAK MERCER & TENCH Eastcheap**
**House Central Approach**
**Letchworth Hertfordshire SG6 3DS(GB)**

(54) **Phase-locked clock regeneration device.**

(57) A device to develop a sampling signal from a digitised signal transmitted without its clock information comprises a counter-divider (CD) driven at the rate of pulses from an oscillator (OSC) and a comparator and control circuit (CP) receiving signals (Ck1) representative of transitions of the input signal and arranged to modify the number of stages of the comparator-divider as a function of the phase differences between the cycle frequency of the comparator-divider and the said transitions. This permits the re-sampling of a high frequency digitised signal.

# FIG.1

## PHASE-LOCKED CLOCK REGENERATION DEVICE

The invention relates to a clock regeneration circuit for a digitised signal, with phase locking, commonly referred to as a phase-locked loop. The invention is particularly concerned with a circuit which enables one to re-sample a digital signal of very high frequency in which the clock information has been removed at the transmitter.

In the field of telecommunications, the signals are digitised and transmitted without clock information in order to limit the frequency bandwidth of the transmission channel. Consequently, one needs to be able to reconstitute, at the receiver, a clock signal which permits one to re-sample the received signal with complete reliability. This clock signal is reconstituted from an analysis of the transitions of the received signal, indicating the change from a 0 state to a 1 state, or the reverse. The received signal may have suffered phase variations during the transmission, and these variations can be the source of errors in the regeneration of the clock signal, if a sequence in the received signal comprises a very large number of successive 0s or 1s, thus not giving rise to transitions which permit the rephasing.

In the field of data transmission, one uses for example an HDLC coding according to which the transmitted information cannot have more than seven consecutive bits of the same state. This implies that at the receiver the reconstituted clock does not need to be shifted or scaled by more than one seventh of the duration of one bit. In practice, it is known to solve this problem by using a scaling register in a loop, driven by the pulses at a frequency which is a multiple of the clock frequency (suppressed) of the transmitted signal. The frequency of one cycle of the scaling register corresponds to that of the clock to be reconstituted, and the register is programmed to be able to vary this cycle frequency under the command of the transitions of the incoming signal. The required precision, just as defined above as a function of the nature of the digital transmission code, commonly leads to the use of a scaling register comprising not less than 32 stages. The flip-flops used to make up such a register necessarily have an operational limit frequency which depends upon the technology used. This frequency being fixed, the maximum frequency which can be contemplated for the transmitted signal is therefore divided by 32. Furthermore, in certain known systems, the unit which has as its role to take the decision to increase or to reduce the cycle frequency of the scaling register is built around a "twisted programme", which by its nature is very slow to permit the attainment of the high frequencies required in the field of remote transmission. This is the case for example with the device described in European Patent No. 0157053.

The present invention enables one in particular to reduce the number of stages, all other things being equal, which enables the admission of input signals of very high frequency.

Thus, in accordance with this object, the invention relates to a phase-locked clock regeneration device, for a digitised signal transmitted without its clock information, characterised in that it comprises in combination:

- an oscillator or a signal input arranged to provide pulses at a frequency which is approximately a multiple of the frequency of the said clock information missing from the said digitised signal,

- a counter-divider comprising a plurality of flip-flops arranged in a loop, the said counter-divider being connected so as to be driven at the rate of the pulses of the said oscillator, and a group of such flip-flops being controlled to modify the number of active flip-flops in the said loop and thus to modify the division factor of the said counter-divider,

- a comparator and control circuit connected to become active in response to transitions of the said digitised signal and connected between at least two chosen consecutive flip-flops of the said counter-divider and the said group of flip-flops, this circuit being arranged to take account of the characteristic state of these two consecutive flip-flops at each transition and arranged to develop control signals for flip-flops of the said group, and

- an output circuit connected to at least one chosen flip-flop of the said counter-divider and arranged to develop a sampling signal of the said digitised signal.

In order that the invention may be more fully understood, one presently preferred embodiment of device in accordance with the invention will now be described in detail by way of example and with reference to the accompanying drawings. In the drawings:

Fig. 1 is a general block schematic diagram of the clock regeneration device in accordance with the invention;

Fig. 2 is a schematic diagram, in more detail, of one part of the said device, and in particular showing the counter-divider;

Fig. 3 is a schematic diagram of the comparator and control circuit; and

Fig. 4 is a schematic diagram of a counter-divider having three stages, associated with a compiler-doubler, to illustrate in a more precise manner the functioning of the device.

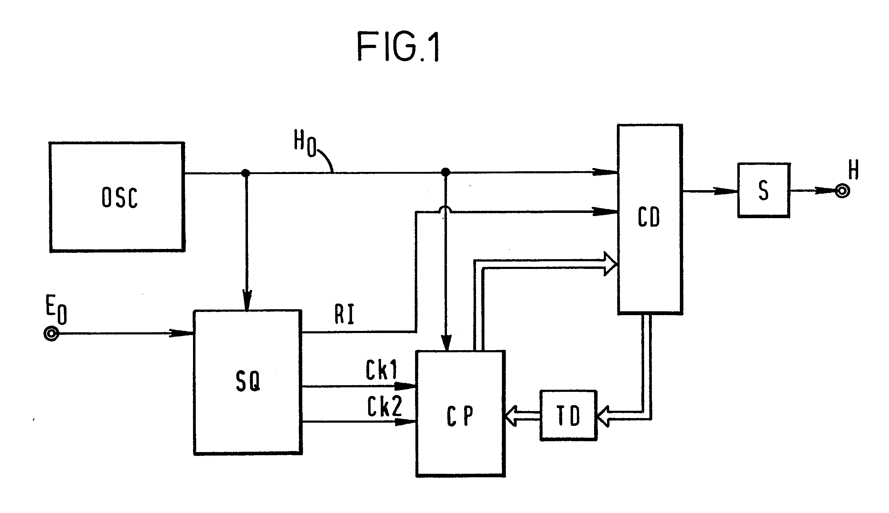

The illustrated device comprises an input $E_0$ to which is fed a high frequency digital signal, transmitted in asynchronous mode, without its clock (that information having been purely and simply removed at emission, it is not even coded in the received signal) and an output H where one has a regenerated sampling signal which can be utilised to effect an appropriate re-sampling of the said digital input signal. The device essentially comprises, as shown in Fig. 1, an oscillator OSC which delivers a pulse signal $H_0$ at a frequency which is approximately equal to a multiple of the frequency of the said clock information removed from the digital input signal, a counter-divider CD made up from D-type flip-flops connected in a loop, connected to the oscillator OSC in order to be driven at the rate of the pulses $H_0$, a comparator and control circuit CP arranged and connected so as to be brought into effect in response to transitions of the digital input signal and interconnected between two parts of the counter-divider, as well as an output circuit S connected to one or more chosen flip-flops of the counter-divider CD in order to feed the sampling signal mentioned above to the output H. It is to be noted that in practice the device need not include an oscillator, that oscillator being external to the assembly. In this case, the oscillator OSC is replaced by a simple signal input $H_0$. The sampling signal available at the output H is no more than a reconstitution, as precise as possible, of the clock signal which has been removed upon emission of the digital signal fed to the input $E_0$. However, in the following description, the term "clock signal" will be reserved for the signal $H_0$ which is delivered by the oscillator OSC and which effectively constitutes the real clock of the device which is the subject of the invention, synchronising all the flip-flops which make up the device. Moreover, it is remarkable that this assembly is here only made up from flip-flops, in this case D type flip-flops, to the exclusion of all combinatory logic gates. The latter would introduce, in effect, delays which of necessity would have to be taken into account and compensated. For this reason, the system is perfectly transposable into another technology, without it being necessary to "adjust" the system in order to deal with supplementary problems introduced by such delays. In the described example, the flip-flops are flip-flops using HCMOS technology. The performance of the device and in particular the permissible limit frequency of the input signal could be improved in the future by using flip-flops made in accordance with improved technology appropriate to their manufacture.

The sequencer SQ is an assembly of flip-flops arranged to develop from the input signal applied at EO and from the clock signal $H_0$ a certain number of control signals which are fed to the counter-divider CD and to the comparator and control circuit CP. These signals are in particular:
- control and comparison pulses Ck1 developed in response to transitions of the signal fed to the input $E_0$,
- memorising pulses Ck2 of the new division factor, and
- reinitialisation pulses RI of the counter-divider CD, enabling the latter to be placed in a chosen predetermined state after each transition of the signal fed to the input $E_0$.

The sequencer SQ can be designed in any one of many different ways and its structure is something which will be apparent to the expert in this art, for which reason it will therefore not be described in more detail here.

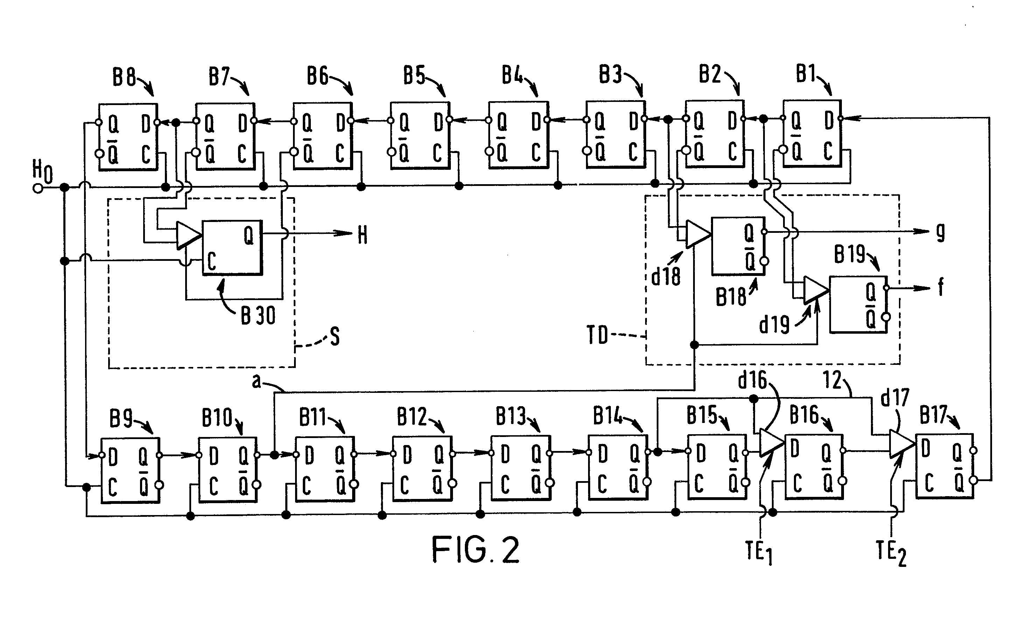

The counter-divider CD, by virtue of it being organised as a loop, goes back again cyclically through the same states. By comparison with the pulses $H_0$, one can thus define a division factor of the counter, equal to 1/2N where N is the number of flip-flops which are effectively in operation in the loop. Ideally, the number of flip-flops ought to be equal to 16 in order to obtain all the desired protection as far as phase differences are concerned. Nevertheless, in order to be able to correct these phase differences, one needs to be able to vary the division factor from one cycle to another, that is to say to be able to vary the number of flip-flops which are effectively in operation in the loop. That is why the counter-divider CD comprises in fact 17 flip-flops B1 to B17 in its loop, with the two last flip-flops B16, B17 being connected in a special manner to the circuit CP, in such a way as to permit one to vary the division factor by "inhibiting" certain flip-flops. More precisely, one can divide by 15 if the flip-flops B15 and B16 are inhibited, by 16 if the flip-flop B16 only is inhibited, and by 17 if all the flip-flops are active in the loop. The arrangement is illustrated in Fig. 2. All the clock inputs C of the flip-flops are connected to the oscillator OSC and thus receive the clock signal $H_0$. The flip-flops are connected in cascade, that is to say the input D of any one flip flop is connected to the output Q of the preceding flip-flop, with the exception of the input D of the first flip-flop B1 which is connected to the complementary output Q of the final flip-flop B17. What is more, the flip-flops B15 to B17 are interconnected between themselves in a special way and are connected to the circuit CP. As shown in Fig. 2, at least the flip-flops B16 and B17 of the counter-divider are of known type with two duplex inputs D.

The corresponding duplexers d16 and d17 thus comprise in actual fact two inputs of type D which can be selected alternatively by the appropriate logic signals fed to the drive inputs TE of these duplexers. For the two flip-flops B16 and B17, their first inputs D, in a manner analogous to the duplexers, are

3

interconnected between themselves and also are connected to the input of the preceding flip-flop B15 by lead 12. The second input D of the duplexer 16 is connected to the output Q of the flip-flop B15, while the second input D of duplexer 17 is connected to the output Q of the flip-flop B16. The control inputs TE1 and TE2 of the duplexers of the flip-flops B16 and B17 are connected to the control outputs of the comparator and command circuit CP which will be described hereinafter. The way in which one can determine the number of active flip-flops in the loop can be summarised as follows:
- if TE1 equals 0 and TE2 equals 0, the flip-flops B15 and B16 are "inhibited" and the counter divides by 15.
- if TE1 equals 0 and TE2 equals 1, only the flip-flop B15 is "inhibited" and the counter divides by 16.
- if TE1 equals 1 and TE2 equals 1, all the flip-flops are active in the loop and the counter divides by 17.

As a matter of fact, it is important to note that all the flip-flops of the counter-divider CD are actually here chosen to be of the same type as the flip-flops B16 and B17 described above. Their duplexers have not been illustrated in order not to complicate the schematic diagram of Fig. 2 unnecessarily. These other duplexers are used for the reinitialisation (or the resynchronisation) of the array of the counter-divider after each detection of a transition of the input signal and thus after a possible modification of the division factor. Expressed in another way, after each appearance of a pulse Ck1, a reinitialisation pulse RI is developed by the sequencer SQ. This pulse is fed to all the control inputs TE of the duplexers of the flip-flops B1 to B15. Besides, logic states are imposed on the said second inputs D of the duplexers (the inputs which are not connected to the outputs of the preceding flip-flops). The appearance of the pulse RI causes the expansion of all the flip-flops and places the counter again in a predetermined state which permits its resynchronisation. As an example, one pre-positions the said second input D of the flip-flops B1 to B5 to 1 and the second inputs D of the flip-flops B6 to B15 to 0, which permits the reinitialisation of the counter into a state acceptable to the appearance of the pulse RI.

The phase comparison which enables it to be decided if there is a need to vary the division factor of the counter is effected by taking account of the characteristic state of the two flip-flops B1 and B2, consecutive in the loop of the counter-divider, while the development of the corresponding sampling pulse is effective here from a flip-flop 87 which is "remote" from the flip-flops B1, B2 for which the sampling pulse should be generated at a moment when the state of the input signal is well stabilised, that is to say with a scaling in time sufficient in relation to the detected transition. For example, one can choose a clock frequency such that for N = 16, a zero phase difference will be represented by the characteristic states B1 = 1 and B2 = 0 at the moment when the pulse Ck1 appears (detection of a transition).

If B1 = 0 and B2 = 0, this means that the counter-divider is delayed with respect to the transition and that it is therefore necessary to decrease the number of active flip-flops in the loop, then N = 15.

If B1 = 1 and B2 = 1, this means that the counter is advanced and that it is necessary to increase the number of active flip-flops in the loop, that is to say to choose N = 17.

According to one important feature of the invention, a compiler-doubler TD is connected between the flip-flop outputs D1, D3 and the comparator and control circuit CP, in order to double the frequency of occurrence of the aforementioned characteristic state in one cycle of the counter-divider. Thus, instead of scanning the characteristic states at points b and c of the counter loop, that is to say at the outputs Q of the flip-flops B1 and B2, one searches for the appearance of this same state at the outputs f and g of the compiler-doubler TD. The latter comprises two flip-flops B18 and B19 with two duplex inputs D. The inputs of each flip-flop are connected to the outputs of the flip-flops B1 and B2 respectively. The control inputs of the duplexers 18, 19 are connected to each other and receive a signal representative of the evolutionary sense of the characteristic state. In the illustrated example, these duplex control inputs are connected directly to one output Q of another, chosen, flip-flop B10 of the counter-divider.

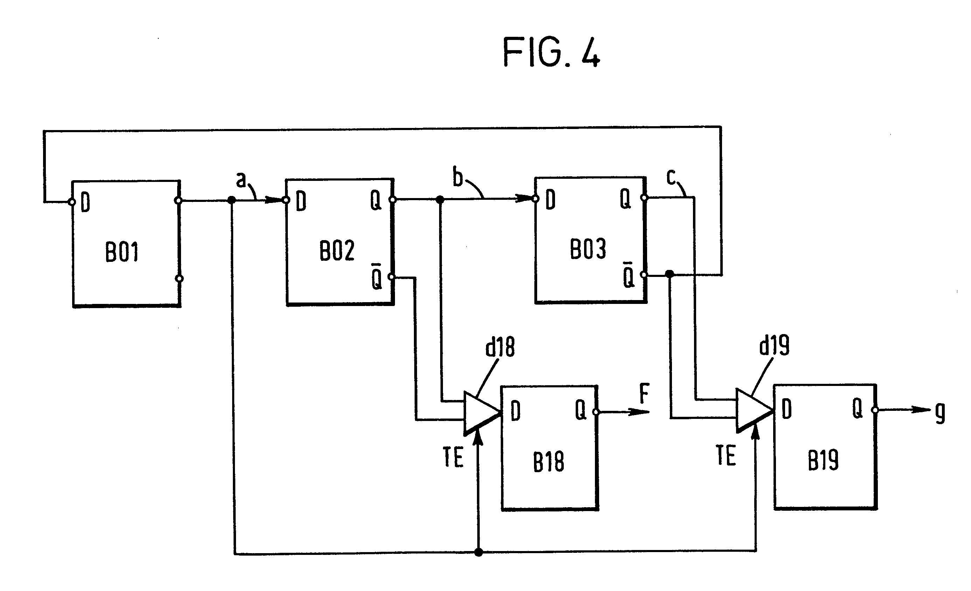

The operation of this compiler-doubler will now be described in more detail with reference to Fig. 4 where there is shown a compiler-doubler TD analogous to that of Fig. 2, associated with a counter-divider having three stages. This counter-divider is thus composed of flip-flops BO1, BO2 and BO3. The successive states of this counter-divider (that is to say the states of the outputs a,b,c) are as follows;

| a | b | c |
|---|---|---|
| 0 | 0 | 0 |
| 1 | 0 | 0 |
| 1 | 1 | 0 |
| 1 | 1 | 1 |
| 0 | 1 | 1 |
| 0 | 0 | 1 |

One can for example choose to detect the characteristic state of the two last stages and to consider that the state 01 of the outputs b, c is the state sought at the moment of a transition. It will be apparent that this state appears only once, preceded by the state 00 and followed by the state 11. If one supplements the counter by the compiler-doubler (B18,B19), reverting to the substitution of the output f for the output b and the output g for the output c, one obtains the following table:

| a | f | g |
|---|---|---|
| 0 | 0 | 0 |
| 1 | 1 | 1 |
| 1 | 0 | 1 |
| 1 | 0 | 0 |
| 0 | 1 | 1 |
| 0 | 0 | 1 |

It will be seen that the sought-for characteristic state 01 appears twice in the course of the cycle of the counter-divider, preceded and followed by the states 00 and 11. The state of the output a enables one to determine the "rising" or "falling" sense of the counter as modified by the compiler-doubler. This is why the output a of the flip-flop BO1 drives the inputs TE of the duplexers 18 and 19. The driving of the duplexers is such that if the sense is "rising" then one takes the outputs Q of the flip-flops BO2 and BO3, and, if the sense is "falling", one takes the outputs Q of the flip-flops BO2 and BO3.

In the complete assembly shown in Fig. 2, the operation of the compiler-doubler TD is analogous to that described above, and the function of the flip-flop BO1 can be fulfilled by another flip-flop chosen judiciously within the loop. Here the output Q of the flip-flop B10 has been chosen.

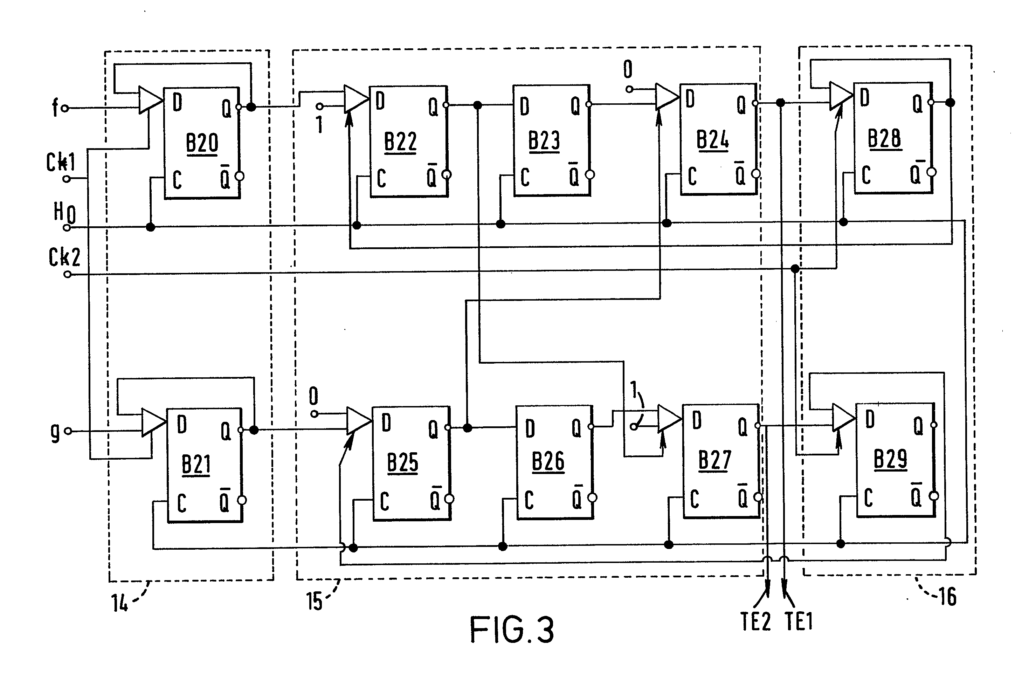

The comparator and control circuit CP will now be described with particular reference to Fig. 3. The circuit splits into a first, memorising circuit 14, driven by the pulses Ck1, a calculation circuit 15 and a memorising circuit 16 driven by the pulses Ck2. All the clock inputs C of the flip-flops of this circuit CP are connected to the oscillator OSC and thus receive the pulses of frequency $H_0$. The circuit 14 comprises two D-type flip-flops B20 and B21 with duplex inputs D. For each flip-flop the output Q is connected to its own first duplex input. The second input is connected to the output Q of the flip-flop B18 or B19 respectively of the compiler-doubler TD. Finally, the control inputs of the duplexers of these two flip-flops are connected to receive, jointly, the signal Ck1 developed by the sequencer SQ and representative of the transition of the input signal fed in at $E_0$. Consequently, at each transition, the states f,g of the compiler-doubler TD are respectively memorised at the outputs Q of the flip-flops B20 and B21 for the whole of one cycle of the counter-divider. One thus has available all the time necessary to take the decision to change or not to change the division factor of the counter-divider. This is effected by the calculation circuit 15 which comprises 6 D-type flip-flops connected in two flip-flop branches, in cascade, B22 to B24 of the one part and B25 to B27 of the other part.

The second duplex input D of the flip-flop B22 is connected to the output Q of the flip-flop B20, with its first input being set to a level 1. Its output Q is connected to the input D of the flip-flop B23 (whose duplexer is maintained in a given state). The output Q of the flip-flop B23 is connected to the second input D of the duplexer of the flip-flop B24, whose first input is at a level 0.

The first duplex input D of the flip-flop 25 is connected to the output Q of the flip-flop B21, and its second input is set to a level 0. Its output Q is connected to the input D of the flip-flop B26. The output Q of this latter flip-flop is connected to the first input D of the duplexer of the flip-flop B27 whose second input is set to a level 1.

The output Q of the flip-flop B22 is connected to the control input of the duplexer of the flip-flop B27. The output Q of the flip-flop B25 is connected to the control input of the duplexer of the flip-flop B24.

The outputs Q of the flip-flops B24 and B27 respectively deliver the signals T1 and T2 which control the inhibition of the flip-flops B15 and/or B16, as described above. At the same, these signals are memorised by the second memorising circuit 16, which is analogous to the circuit 14, in order to supply data to circuit 15 as to the number of flip-flops which are active in the loop. This data is taken into account for the following calculation. In order to accomplish this the circuit 16 comprises two D type flip-flops B28 and B29. The flip-flop B28 receives and memorises the signal TE1, while the flip-flop B28 receives and memorises the signal TE2. The two control inputs of the duplexers of the flip-flops B28 and B29 are connected together in order jointly to receive the control signal Ck2. The output Q of the flip-flop B28 is connected to the control input of the duplexer of the flip-flop B22 and the output Q of the flip-flop B29 is connected to the control input of the duplexer of the flip-flop B25.

The output circuit S is here made up of a single D type flip-flop B30 whose first and second duplex inputs are respectively connected to the outputs Q and Q of the flip-flop B7, with the control inputs of the duplexer being connected to the output Q of the flip-flop B6. This simple arrangement achieves the same "doubling" function as the circuit TD analysed in detail above. The sampling pulse H is thus delivered approximately "at the centre" of the pulse corresponding to the input signal applied to $E_0$, that is to say at an instant when or in a state where that input signal is well stabilised. The pulses delivered at H are thus suitable for a re-sampling of the input signal.

It should be understood that the invention is not to be regarded as limited to the particular embodiment which has been described above. In particular, a counter-divider comprising between 15 and 17 active flip-flops has been described because that represents an excellent compromise, enabling one to obtain the best performance in terms of "speed" while still ensuring a desirable excursion window or tracking window (plus or minus 3%). It is clearly evident however that depending upon particular needs one could choose a different number of flip-flops (for example between 19 and 21 or between 31 and 33) which would enable one to increase the tracking window.

## Claims

1. Phase-locked clock regeneration device for a digitised signal transmitted without its clock information, characterised in that it comprises, in combination:
- an oscillator (OSC) or a signal input arranged to provide pulses at a frequency which is approximately a multiple of the frequency of the said clock information removed from the said digitised signal,
- a counter-divider (CD) comprising a plurality of flip-flops arranged in a loop, said counter-divider being connected in such manner as to be driven at the rate of the pulses from the said oscillator (OSC), with a group of such flip-flops being controlled to modify the number of active flip-flops in the said loop and thus to modify the division factor of the said counter-divider,
- a comparator and control circuit (CP) connected to become active in response to transitions of the said digitised signal and connected between at least two chosen consecutive flip-flops (B1,B2) of the said counter-divider and the said group of flip-flops (B16,B17), this circuit being arranged to take account of the characteristic state of said two consecutive flip-flops at each transition and arranged to develop control signals for flip-flops of the said group, and
- an output circuit (S) connected to at least one chosen flip-flop of said counter-divider and arranged to develop a sampling signal of the said digitised signal.

2. A device according to claim 1, characterised in that a compiler-doubler (TD) arranged to double the frequency of occurrence of the said characteristic state in one cycle of said counter-divider is connected between the said two consecutive flip-flops (B1,B2) and said comparator and control circuit (CP).

3. A device according to claim 1 or 2, characterised in that the flip-flops of said counter-divider are D-type flip-flops and characterised in that the clock inputs (C) of all these flip-flops are connected to receive the pulses from said oscillator (OSC).

4. A device according to any one of claims 1 to 3, characterised in that two consecutive flip-flops in the loop of said counter-divider are of D-type with two duplex inputs, in that first analogue inputs of these flip-flops are connected between themselves and are connected to the input of the preceding flip-flop (B15), and in that the second input of one such flip-flop is connected to the output of the preceding flip-flop, with the comparator and control circuit being connected to the control inputs of duplexers of these flip-flops.

5. A device according to any one of claims 2 to 4, characterised in that said compiler-doubler (TD) comprises two flip-flops (B18,B19) having two duplex inputs D, wherein the inputs are respectively connected to the complementary outputs of said two consecutive flip-flops (B1,B2) of said counter-divider, and wherein the duplex control inputs are connected between themselves and receive a signal representative of the current sense of the characteristic state.

6. A device according to claim 5, characterised in that said duplex control inputs, connected between themselves, are connected directly to one output of another flip-flop (B10) of said counter-divider.

7. A device according to any one of claims 2 to 6, characterised in that said output circuit is connected to a flip-flop (B7) of said counter-divider remote from said two consecutive flip-flops (B1,B2) connected to said comparator and control circuit (CP).

# FIG.1

EP 0 371 624 A1

FIG. 2

EP 0 371 624 A1

FIG.3

EP 0 371 624 A1

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 157 053 (WESTERN DIGITAL CORP.) <br> * Page 10, line 12 - page 118, line 26; page 17, line 17 - page 18, line 9; page 19, lines 26-33 * <br> --- | 1 | H 04 L 7/033 |
| A | US-A-3 668 315 (HEITZMANN) <br> * Column 2, lines 13-62 * <br> --- | 1,3,4 | |
| A | IMB TECHNICAL DISCLOSURE BULLETIN, vol. 27, no. 11, April 1985, page 6387, IBM Corp., New York, US; N.N.: "Scrambler counter as a phase-locked oscillator" <br> * In total * <br> --- | 3,4 | |
| A | ELECTRONIC ENGINEERING, vol. 40, no. 488, October 1968, pages 542-546, London, GB; J. BAGULEY: "Remote control of radio communication systems" <br> * Page 543, figure 8; page 544, left-hand column, lines 6-16 * <br> ----- | 2,5 | TECHNICAL FIELDS SEARCHED (Int. Cl.5) <br><br> H 04 J <br> H 04 L |

The present search report has been drawn up for all claims

| Place of search | Date of completion of the search | Examiner |
|---|---|---|
| THE HAGUE | 18-01-1990 | VAN DEN BERG,J.G.J. |